# EUROPÄISCHE PATENTSCHRIFT

(11) **EP 2 189 806 B1**
(45) Veröffentlichungstag und Bekanntmachung des Hinweises auf die Patenterteilung: **18.05.2011**
(21) Anmeldenummer: 08105830.7
(22) Anmeldetag: 20.11.2008
(51) Int. Cl.: G01S 7/497, G01V 8/00

(54) **Optoelektronischer Sensor**
Optoelectronic sensor
Capteur optoélectronique

(43) Veröffentlichungstag der Anmeldung: 26.05.2010
(73) Patentinhaber: SICK AG, 79183 Waldkirch (DE)
(72) Erfinder: Hug, Gottfried, 79183 Waldkirch (DE); Reiner, Dr. Gernot, 79194 Gundelfingen (DE)
(74) Vertreter: Hehl, Ulrich

(56) Entgegenhaltungen:
- EP-A- 1 211 762
- EP-A- 1 298 449
- JP-A- 61 080 922
- BAUWELINCK J ET AL: "A High-Resolution Burst-Mode Laser Transmitter With Fast and Accurate Level Monitoring for 1.25Gb/s Upstream GPONs" IEEE JOURNAL OF SOLID-STATE CIRCUITS, IEEE SERVICE CENTER, PISCATAWAY, NJ, US, Bd. 40, Nr. 6, 1. Juni 2005 (2005-06-01), Seiten 1322-1330, XP011133185 ISSN: 0018-9200

## Beschreibung

Die Erfindung betrifft einen optoelektronischen Sensor und ein Verfahren zum Betreiben eines Lichtsenders in einem optoelektronischen Sensor nach dem Oberbegriff von Anspruch 1 beziehungsweise 9.

Mit optoelektronischen Sensoren kann nach dem bekannten Prinzip des Lichtlaufzeitverfahrens die Entfernung von Objekten bestimmt werden. Dazu wird bei einem Pulslaufzeitverfahren ein kurzer Lichtpuls ausgesendet und die Zeit bis zum Empfang einer Remission oder Reflexion des Lichtpulses gemessen. Alternativ wird bei einem Phasenverfahren Sendelicht amplitudenmoduliert und eine Phasenverschiebung zwischen Sende- und Empfangslicht bestimmt.

Die Entfernungsmessung kann beispielsweise in der Fahrzeugsicherheit, der Logistik- oder Fabrikautomatisierung oder der Sicherheitstechnik benötigt werden. Insbesondere kann ein Entfernungsmesser, der auf einem reflektierten Lichtstrahl basiert, auf eine Entfernungsänderung des Reflektors oder des reflektierenden oder remittierenden Ziels reagieren. Eine besondere Anwendung ist eine Reflexionslichtschranke, bei welcher der Raumbereich und der Abstand zwischen Lichtsender und Reflektor überwacht wird. Eine andere Anwendung sind entfernungsmessende Laserscanner, deren Fahrstrahl eine Linie oder sogar eine Fläche ausmisst.

Soll die Auflösung der Entfernungsmessung eine Genauigkeit im Bereich einiger zehn Millimeter erreichen, so muss die Lichtlaufzeit in einer Größenordnung von hundert Picosekunden genau bestimmt werden. Um eine Distanzauflösung von einem Millimeter zu erreichen, müssen sechs Picosekunden messtechnisch erfasst werden.

Bei derartigen Anforderungen an die zeitliche Präzision stört schon eine geringfügige zeitliche Abweichung zwischen dem Zeitpunkt, zu dem der Befehl für das Aussenden des Lichtpulses gegeben wird, und dem tatsächlichen Aussenden. Laserlichtquellen emittieren aber nicht sofort bei Anlegen eines elektrischen Signals Licht. In einem Bereich unterhalb eines als Laserschwelle bezeichneten Mindeststroms genügt dafür die Ladungsträgerdichte nicht. Selbst bei Anlegen eines Stroms oberhalb der Laserschwelle wird eine gewisse Anlaufzeit benötigt, um genügend Ladungsträger zu bilden, und dies führt zu einem zeitlichen Versatz zwischen dem elektrischen Eingangssignal an den Laser und dessen optischem Ausgangssignal.

Um dies zu vermeiden, wird üblicherweise sowohl bei Pulslaufzeitverfahren wie bei Phasenverfahren der Laser auf ein Niveau oberhalb der Laserschwelle vorgespannt. Dabei emittiert der Laser stets eine gewisse Lichtmenge auch dann, wenn kein Lichtpuls ausgesandt werden soll. Um diese Dauerstrich-Lichtleistung gering zu halten, muss der Vorstrom knapp oberhalb der Laserschwelle gehalten werden.

Somit haben derartige Systeme eine Reihe von Nachteilen. Jegliches Ausgangslicht, auch wenn es gering gehalten wird, schneidet in den verfügbaren Abstand zu eigentlichen Sendeleistungen ein. Das verringert nicht nur die Messgenauigkeit durch verringerte auswertbare Signalabstände, sondern beeinträchtigt auch möglicherweise die Laserschutzklasse, da gemäß einschlägiger Sicherheitsbestimmungen für den Augenschutz die gemittelte optische Ausgangsleistung unterhalb eines erlaubten Maximalwerts bleiben muss und aufgrund des Vorstroms entstehendes Licht bereits einen Anteil davon für sich beansprucht.

Um den Vorstrom knapp oberhalb der Laserschwelle halten zu können, ist ein optisches Feedback für eine Regelung erforderlich. Dazu wird zu der Laserdiode eine Monitordiode angeordnet. Der erforderliche Biasstrom wird dann stets angepasst, um eine konstante optische Ausgangsleistung trotz Alterungseffekten oder Temperatureffekten aufrechtzuerhalten, welche die Laserschwelle verschieben.

Zudem reagiert gerade bei kurzen Einschaltdauern, etwa bei zeitlich verhältnismäßig dünn verteilten kurzen Pulsen, und bei großen Pulsströmen die beschriebene Regelung sehr empfindlich auf Schwankungen, und dies führt möglicherweise zu instabilem Verhalten der Laserdiode.

Die EP 1 298 449 A2 offenbart einen optischen Sensor mit einem Sendelichtimpulse emittierenden Sender, der zwei Schalter aufweist. Schließen des ersten Schalters führt dazu, dass die Laserleistung einer Laserdiode des Sensors auf einen Wert dicht oberhalb der Laserschwelle geregelt wird, während der zweite Schalter einen Sendelichtimpuls auslöst. Während Pulspausen, in denen beide Schalter geöffnet sind, emittiert der Sender kein Licht, und durch geeignete Vorgabe des Puls- Pausenverhältnisses sollen Augensicherheitsanforderungen einschlägiger Laserklassen gewährleistet werden.

Außerhalb der optoelektronischen Sensoren ist im Bereich optischer Netze aus der Arbeit von D. Verhulst et al. "Theoretical and experimental study of laser turn-on delay in a GigaPON system with pre-biasing bits" bekannt, für ein Zeitmultiplexverfahren den jeweiligen Laser nur in dem ihm zugeordneten Zeitschlitz vorzuspannen. Innerhalb eines zugewiesenen Zeitschlitzes ist das Verfahren aber völlig analog zu dem oben beschriebenen, und es werden auch keine Lichtpulse emittiert, sondern ein durch das zu übertragende Bitmuster bestimmter Burst, der eher einem modulierten Dauersignal als einem Puls entspricht.

Es ist daher Aufgabe der Erfindung, auf einfache Weise das zeitlich hochpräzise Ansprechen eines Lasers in einem optoelektronischen Sensor zu erreichen.

Diese Aufgabe wird durch einen optoelektronischen Sensor gemäß Anspruch 1 und ein Verfahren zum Betreiben eines Lichtsenders in einem optoelektronischen Sensor gemäß Anspruch 9 gelöst.

Dabei geht die Erfindung von dem Prinzip aus, den Vorbereitungszustand nicht ständig einzunehmen, sondern nur jeweils in einem engen zeitlichen Intervall um den Sendepuls herum. Der Laser wird kurz vor dem eigentlichen Laserpuls mit einem Vorpuls angesteuert, der den Laser vorbereitend in die Nähe der Laserschwelle treibt, um eine Verzögerung bis zur Emission von Licht zu vermeiden oder zumindest sehr gering zu halten.

Die erfindungsgemäße Lösung hat den Vorteil, dass der Sendezeitpunkt des Pulses mit der elektronischen Ansteuerung genau genug zusammenfällt, um auch Lichtlaufzeitmessungen mit einer zeitlichen Präzision unterhalb von einer Nanosekunde zu ermöglichen. Nichtlinearitäten in der Beziehung zwischen elektrischem Eingangssignal und optischem Ausgangssignal können mit der Erfindung ausgeglichen werden. Solche Nichtlinearitäten können in besonderem Maße bei Laserdioden im sichtbaren Bereich auftreten, wenngleich die Erfindung auch in anderen Frequenzbereichen wie etwa im Infraroten einsetzbar ist.

Die Messung störendes und aus Sicht von Augenschutzbestimmungen bedenkliches Dauerlicht aufgrund einer Vorspannung des Lasers entfällt, da der Laser außerhalb des Vorbereitungszustands kein Licht emittiert. Der Laser erwärmt sich weniger, dies führt zu längerer Lebensdauer und hilft, Alterungs- und Temperatureffekte zu vermeiden, die ihrerseits die Laserschwelle verschieben würden. Eine Monitordiode ist nicht erforderlich, so dass kostengünstigere Systeme ermöglicht sind.

Diese Vorteile kommen besonders stark zum Tragen, wenn die Einschaltdauern gering sind, beispielsweise wenn der Laser in einem Betrieb mit vergleichsweise seltenen, kurzen Pulsen weniger als 1% der Zeit aktiv ist, und ebenso bei hohen Pulsströmen etwa oberhalb des Zweifachen der Laserschwelle.

Die Treiberschaltung ist dafür ausgebildet, in dem Vorbereitungszustand die Laserlichtquelle vorzuspannen, beziehungsweise der Laserlichtquelle einen Biasstrom zuzuführen. Damit wird die Laserlichtquelle vor dem eigentlichen Puls bereits mit dem Signal angesteuert. Die Amplitude für die Vorspannung und den Biasstrom ist aber geringer gewählt, nämlich ungefähr im Bereich der Laserschwelle.

Vorteilhafterweise ist eine Steuereinheit vorgesehen, welche dafür ausgebildet ist, der Treiberschaltung Eigenschaften des Laserpulses und/oder des Vorbereitungszustands vorzugeben, insbesondere Zeitverhalten und/oder Amplitudenverhalten. Merkmale der Treiberschaltung können stets auch der Steuereinheit zugeordnet werden und umgekehrt. Unter Zeitverhalten sind zeitliche Eigenschaften einzelner Pulse zusammengefasst, also etwa Beginn, Dauer und Ende, aber auch das Muster, wie Pulse über ein längeres Zeitintervall verteilt sind. Im einfachsten Fall genügt hierfür die Periode zwischen zwei Pulsen, also etwa ein Puls je Mikrosekunde, es sind aber beliebig komplizierte Muster denkbar. Denkbares Amplitudenverhalten ist die Vorgabe einer angestrebten Maximalamplitude bis hin zu einer Funktion der Amplitude über die Pulsdauer, also eine vollständige Pulsform. Da die Ansteuerung in dem Vorbereitungszustand in Form eines Vorpulses erfolgen kann, betreffen die genannten Eigenschaften je nach Ausführungsform sowohl den Vorbereitungszustand als auch den Arbeitszustand.

Die Treiberschaltung ist bevorzugt dafür ausgebildet, den Lichtsender mit einem kurzen zeitlichen Vorlauf in den Vorbereitungszustand zu versetzen, der insbesondere etwa dem ein- bis fünffachen der Dauer des Laserpulses entspricht. Dies ist auf die Pulsbreite bezogen, weil mögliche Verzögerungen in etwa dieser Größenordnung zu erwarten sind. Eine typische Pulsbreite liegt bei einigen Nanosekunden, beispielsweise 5ns, so dass ein zeitlicher Vorlauf von 5-25-ns, noch bevorzugter 10-15ns gewählt wird. Gesucht ist ein vernünftiger Kompromiss aus einer möglichst kurzen Dauer des Vorbereitungszustands und der Gewissheit, dass innerhalb dieser Dauer eine angestrebte Ladungsträgerdichte und damit ein angestrebter Abstand zur Laserschwelle tatsächlich erreicht wird.

Die Treiberschaltung ist weiterhin bevorzugt dafür ausgebildet, den Vorbereitungszustand für den Lichtsender frühestens zum Ende des Laserpulses und dann schnell, insbesondere spätestens nach einer ein- bis fünffachen Dauer des Laserpulses zu beenden. Für die zeitlichen Größenordnungen gilt analog das im vorhergehenden Absatz Gesagte. Der Vorbereitungszustand sollte den Arbeitszustand vollständig überlagern, weil bei früherem Ende des Vorbereitungszustands dem Lichtpuls Energie fehlt. Natürlich ist denkbar, den Vorpuls mit dem Zündzeitpunkt des Lasers bei Beginn des ausgesandten Laserpulses zu beenden und die fehlende Energie durch stärkere Ansteuerung während des Arbeitszustands zu kompensieren, aber dafür ist eine genaue zeitlich Abstimmung erforderlich. Unkritischer ist ein gewisses Andauern des Vorbereitungszustands über den Arbeitszustand hinaus, wobei hier ähnlich wie beim Vorlauf ein möglichst baldiges Abschalten angestrebt ist. Eine zu der Pulsdauer von beispielsweise 5 ns alternative Bezugsgröße für den zeitlichen Vorlauf und das Beenden des Vorbereitungszustands ist die Lebensdauer der Ladungsträger, die durch die Vorspannung beziehungsweise den Biasstrom erzeugt werden und die typischerweise in der Größenordnung von 10 ns liegt.

Erfindungsgemäß ist die Treiberschaltung dafür ausgebildet, die Laserlichtquelle in dem Vorbereitungszustand bis zum Beginn des Laserpulses nahe an die Laserschwelle heranzuführen, insbesondere auf 70%-90% der Laserschwelle, sie jedoch nicht zu überschreiten. Die Vorspannung oder der Biasstrom bleiben also strikt unterschwellig, so dass die Laserlichtquelle nur Licht während der ausgesandten Lichtpulse emittiert. Störungen der Messung durch Licht während des Vorbereitungszustands oder Überlegungen hinsichtlich der Augenschutzklasse wegen dieses Lichts sind deshalb nicht erforderlich. Für den Augenschutz ist allein der Arbeitszustand maßgeblich, da nur hier überhaupt Licht ausgesandt wird. Die Laserschwelle liegt beispielsweise in einer Größenordnung von 50mA, wobei sie noch von Umgebungsbedingungen wie der Betriebstemperatur abhängt. Die Pulshöhe während des Arbeitszustands hat einen deutlichen Abstand, sie beträgt bevorzugt das zwei- bis achtfache der Laserschwelle und noch bevorzugter 200-300mA.

In einer besonders bevorzugten Ausführungsform ist ein Temperaturfühler vorgesehen, um die Betriebstemperatur der Laserlichtquelle zu bestimmen, wobei die Treiberschaltung dafür ausgebildet ist, die Amplitude in dem Vorbereitungszustand anhand einer Tabelle oder Rechenvorschrift temperaturabhängig zu wählen. Statt eines einzelnen sind zwei sich gegenseitig überwachende Temperaturfühler denkbar. Die Laserschwelle ist eine temperaturabhängige Größe. Ist in der Treiberschaltung oder der Steuerung eine Tabelle oder Rechenvorschrift hinterlegt, welche die benötigte Laserschwelle bei gegebener Temperatur enthält, so kann die Laserschwelle oder der angestrebte Bruchteil der Laserschwelle ausgelesen und temperaturabhängig nachkorrigiert werden. Damit wird der Sensor temperaturstabil, und Verzögerungen zwischen angestrebtem und tatsächlichem Zündzeitpunkt des Lasers werden auch bei schwankender Außen- oder Betriebstemperatur vermieden. Die hinterlegte Amplitude ist die maßgebliche Größe für die Laseransteuerung während des Vorbereitungszustands, also beispielsweise die Amplitude der Vorspannung oder des Biasstroms.

Alternativ zu einer Tabelle oder Rechenvorschrift mit temperaturabhängigen Laserschwellen kann auch das gesamte Kennlinienfeld des Lasers hinterlegt sein, also die optische Ausgangsleistung in Abhängigkeit von dem Laserstrom für verschiedene Temperaturen. Auf Basis dieses Kennlinienfelds kann dann sogar über die Laserschwelle hinaus auch der eigentliche Laserpuls während des Arbeitszustands nachgesteuert werden, so dass er unabhängig von der Temperatur dieselbe Form und Maximalamplitude behält.

Die Treiberschaltung ist bevorzugt dafür ausgebildet, die Laserlichtquelle außerhalb des Arbeitszustandes und des Vorbereitungszustands stromfrei zu schalten und/oder den Arbeitszustand nur über den Vorbereitungszustand zu erreichen. Betrachtungen zu Augenschutzbestimmungen sind dann nur noch auf den Arbeitszustand zu beziehen, da ansonsten die Laserlichtquelle nicht optisch aktiv sein kann. Indem außerhalb des Vorbereitungszustands die Laserlichtquelle stromlos geschaltet, also vollständig abgeschaltet wird, kann ihre Langlebigkeit erhöht und die Betriebstemperatur stabiler gehalten werden.

Der Sensor ist bevorzugt als entfernungsmessendes System ausgebildet und weist insbesondere einen Lichtempfänger für den Empfang von Lichtpulsen sowie eine Auswertungseinheit auf, welche dafür ausgebildet ist, mittels Lichtlaufzeitverfahren aus einer Pulslaufzeit zwischen Aussenden und Empfangen eines Lichtpulses eine Entfernung zu berechnen. Derartige Systeme sind in besonderem Maße auf exaktes zeitliches Verhalten angewiesen. Dabei sind sowohl absolute Entfernungsmesser vorstellbar, die also die Entfernung zu einem Objekt numerisch bestimmen, als auch überwachende Entfernungsmesser, die auf ein Zielobjekt ausgerichtet sind und feststellen, ob und wie stark sich der Abstand zu diesem Zielobjekt verändert.

In bevorzugter Weiterbildung ist der Sensor als entfernungsmessender Laserscanner ausgebildet und weist insbesondere zusätzlich eine Ablenkeinheit auf, um mit nacheinander ausgesandten Lichtpulsen einen Überwachungsbereich zu überstreichen. Dabei werden also Pulse durch die Ablenkeinheit über eine Linie-oder eine Fläche geführt, so dass die Aufzeichnung einer Entfernungskarte ermöglicht wird. Als Ablenkeinheit dienen an sich bekannte Elemente wie Drehspiegel oder Polygonradspiegel. Laserscanner verwenden häufig höhere Pulsleistungen im Bereich bis zu einigen Watt und geringere Abtastraten von beispielsweise 25-40 kHz, um den abweichenden Anforderungen der typischen Anwendungen gerecht zu werden.

Das erfindungsgemäße Verfahren kann auf ähnliche Weise durch weitere Merkmale ausgestaltet werden , wie in den sich an die unabhängigen Ansprüche anschließenden Unteransprüchen beschirieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine schematische Blockdarstellung einer Ausführungsform eines erfin- dungsgemäßen Sensors;
- Fig. 2: eine schematische Blockdarstellung einer beispielhaften Treiberschaltung für einen Lichtsender; und
- Fig. 3: eine Illustration des Zeit- und Amplitudenverhaltens in einem Zeitintervall, um den Aussendezeitpunkt eines Laserpulses in Form eines Diagramms des Laserstroms über der Zeit.

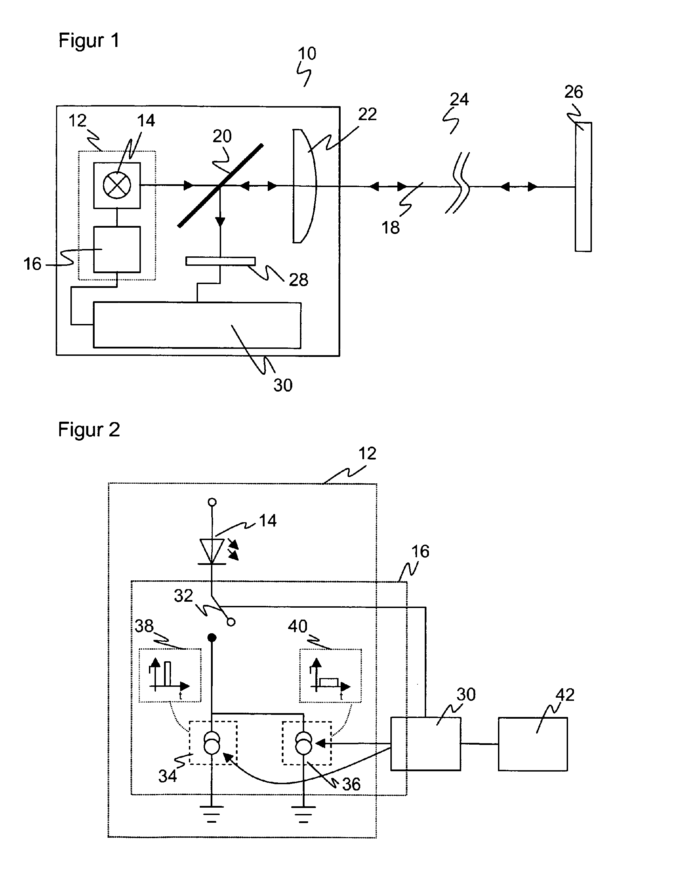

Figur 1 zeigt eine schematische Blockdarstellung eines erfindungsgemäßen optoelektronischen Sensors 10. Ein Lichtsender 12 mit einer Laserlichtquelle 14 und einer Treiberschaltung 16 für die Laserlichtquelle 14 erzeugt Lichtpulse 18. Der Lichtpuls 18 hat üblicherweise eine einfache Form, beispielsweise einer Parabel oder einer Gausskurve, kann aber auch kompliziertere Signalformen annehmen.

Die Lichtpulse 18 transmittieren einen Teilerspiegel 20, wobei der reflektierte Lichtanteil verloren geht und zur Vermeidung optischen Übersprechens absorbiert wird. Durch eine Optik 22, beispielsweise eine Sammellinse, werden die Lichtpulse 18 in einen Überwachungsbereich 24 ausgesandt und dort an Objekten 26 reflektiert oder remittiert.

Die so entstehenden zurückkehrenden Lichtpulse 18 treffen über die Optik 22 erneut auf den Teilerspiegel 20, und der dort reflektierte Lichtanteil wird in einem Lichtempfänger 28 in ein elektrisches Signal umgewandelt. Auch der Lichtempfänger 28 ist nicht auf eine bestimmte Technologie beschränkt. Gewöhnlich wird eine einfache Photodiode verwendet, prinzipiell ist aber auch der Einsatz einer PSD (positionsempfindliche Diode) oder einer Zeile beziehungsweise Matrix von Lichtempfangselementen denkbar, wie etwa einem CCD- oder CMOS-Chip.

Eine Steuerung 30 ist sowohl mit dem Lichtsender 12 als auch mit dem Lichtempfänger 28 verbunden und bestimmt die Lichtlaufzeit zwischen Aussenden und Empfang des Lichtpulses 18 und daraus über die Lichtgeschwindigkeit die Entfernung zu Objekten 16. Die Steuerung 30 kann analog ausgebildet sein, bevorzugt ist aber die Implementierung auf einem oder mehreren digitalen programmierbaren Bausteinen, beispielsweise DSPs (Digital Signal Processor), FPGAs (Field Programmable Gate Array), A-SICs (Application Specific Integrated Circuit) oder Mikroprozessoren. Die Treiberschaltung 16, die in Figur 2 näher erläutert wird, ist bevorzugt analog ausgebildet, kann aber von der Steuerung 30 auch digital angesteuert werden.

Der in Figur 1 dargestellte Autokollimationsaufbau mit Strahlteiler 20 ist nur beispielhaft für einen erfindungsgemäßen Sensor 10 zu verstehen. Es sind andere Grundaufbauten bekannt, beispielsweise solche, bei denen der Lichtsender von einem flächenmäßig größeren Lichtempfänger umgeben ist und somit zurückkehrendes Licht mit einem Verlustanteil, der durch die Fläche des Lichtsenders bestimmt ist, ohne Strahlumlenkung auf den Lichtempfänger fällt. Ein anderes Beispiel ist das Prinzip der Pupillenteilung, bei dem zwei getrennte Optiken vorgesehen sind und Lichtsender und Lichtempfänger nebeneinander angeordnet werden.

Der Sensor 10 kann ein optoelektronischer Taster oder Entfernungsmesser sein. Eine weitere Ausführungsform ist eine Reflexionslichtschranke, also eine Lichtschranke mit einem Lichtsender und einem gegenüber angeordneten Reflektor, wobei eine Unterbrechung des dort reflektierten Strahls detektiert wird. Durch die Messung der Entfernung oder der Änderung der Entfernung dieses Reflektors kann überwacht werden, ob der Reflektor noch am erwarteten Ort steht. Alle genannten Sensoren können auch als Schalter arbeiten, indem ein Schaltereignis bei Detektion eines Objekts in einer bestimmten Entfernung oder bei Abweichung von einer erwarteten Entfernung ausgelöst wird. Auch scannende Systeme sind denkbar, bei denen der ausgesandte Lichtpuls mit einer Ablenkeinheit eine Überwachungslinie oder eine Überwachungsfläche überstreicht, wobei die Ablenkeinheit ein Drehspiegel oder ein Polygonspiegelrad sein kann.

Figur 2 zeigt ein Blockschaltbild des Lichtsenders 12 mit zusätzlichen Elementen, die in Figur 1 der besseren Übersicht halber weggelassen wurden. Die Laserlichtquelle 14 ist hier als Laserdiode dargestellt. Es kommen beliebige Laserlichtquellen 14 in Frage, beispielsweise Kantenemitter oder VCELs (Vertical-Cavity Surface-Emitting Laser). Dabei kommt aber der Effekt der Erfindung am stärksten zum Tragen, je höher die Laserschwelle ist, also je stärker die Laserlichtquelle 14 angesteuert werden muss, ehe sie Licht emittiert, und je temperaturempfindlicher sie ist. Dies betrifft bei verfügbaren Laserlichtquellen 14 solche mit sichtbarem Licht stärker als solche mit infrarotem Licht.

Die Treiberschaltung 16 weist einen Schalter 32 auf, über den die Steuerung 30 den Laserstrom zu der Laserdiode 14 an- und abschalten kann. Es ist eine Pulslaserstromquelle 34 und eine Vorpulslaserstromquelle 36 vorgesehen, welche beide von der Steuerung 30 ansteuerbar sind, um Form, Dauer und Amplitude eines in einem kleinen Fenster 38 beispielhaft dargestellten Pulslaserstroms und eines in einem kleinen Fenster 40 beispielhaft dargestellten Vorpulslaserstroms festzulegen. Wie die Schaltung zeigt, werden Pulslaserstrom und Vorpulslaserstrom gleichzeitig der Laserlichtquelle 14 zugeführt. Es wäre grundsätzlich denkbar, diese beiden Ströme jeweils nur alternativ zuzuschalten, sofern dabei ein Umschaltartefakt unterdrückt werden kann und der Pulslaserstrom entsprechend stärker gewählt wird.

Schließlich ist noch ein Temperaturfühler 42 mit der Steuerung 30 verbunden, welcher die aktuelle Betriebstemperatur der Laserlichtquelle 14 misst, um eine Temperaturkompensation des Vorpulslaserstroms und eventuell auch des Pulslaserstroms vornehmen zu können. Dazu sind Tabellen oder Rechenvorschriften für die Steuerung 30 hinterlegt, welche die erforderlichen Temperaturanpassungen der Eigenschaften des Vorpulslaserstroms und des Pulslaserstroms enthalten, wobei eine wichtige Eigenschaft die für die jeweilige Temperatur erforderliche Amplitude ist. Es kann auch das ganze Kennlinienfeld der Laserlichtquelle 14 gespeichert sein, aus der die Steuerung 30 diese Eigenschaften ableitet. Mit diesen Verfahren wird der gewünschte Abstand zur Laserschwelle unabhängig von der Temperatur eingehalten.

Grundsätzlich ist denkbar, zusätzlich zu der aktuellen Temperatur weitere Umweltbedingungen zu berücksichtigen, um den Vorpulsstrom optimal anzupassen. Man könnte etwa einen Zähler einsetzen, um das Lebensalter der Laserlichtquelle 14 zu bestimmen und eine Kompensation für Alterungseffekte integrieren.

Mittels Schalter 32 und der beiden Stromquellen 34, 36 kann die Steuerung 30 somit die Laserlichtquelle 14 abschalten, durch einen Vorpulslaserstrom in einen Vorbereitungszustand versetzen oder durch einen Pulslaserstrom zum Aussenden eines Lichtpulses 18 ansteuern.

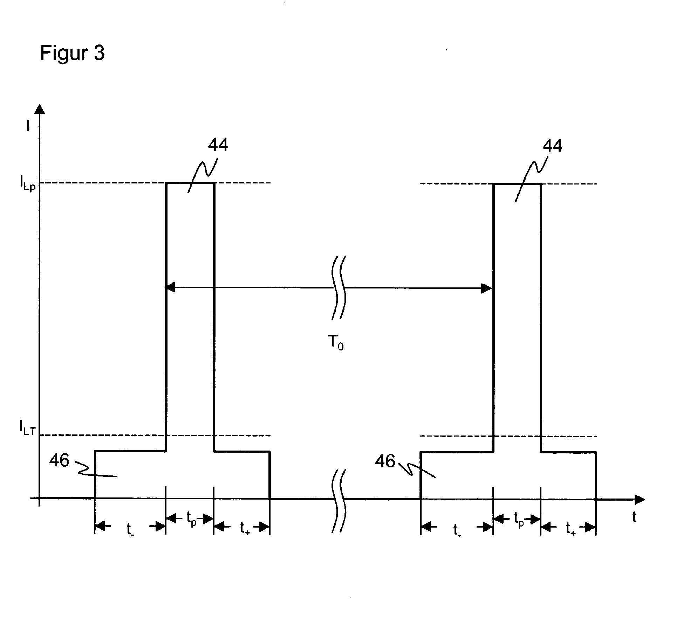

Figur 3 zeigt den derart von der Steuerung 30 erzeugten Verlauf des Laserstroms I über der Zeit in einer Ausführungsform der Erfindung. Lichtpulse 18, hier schematisch als Rechtecke 44 mit Dauer tₚ und Amplitude I_{LP} dargestellt, werden mit einer regelmäßigen Periode T₀ ausgesandt. Beträgt die Periode T₀ beispielsweise eine Mikrosekunde, so entspricht dies einem Lichtweg einschließlich Rückweg von etwa 150m. Innerhalb dieser Messstrecke werden also Mehrdeutigkeiten durch die Periode T₀ vermieden.

Zu einem um t₋ früheren Zeitpunkt als dem Aussendezeitpunkt des Pulses 44 wird der Laserlichtquelle 14 von der Steuerung 30 der Vorpulslaserstrom zugeführt und erzeugt einen Vorpuls 46, der während des Pulses 44 anhält und danach mit einer Verzögerung t₊ abklingt, somit eine Dauer von t₋+tₚ+t₊ hat. Die Amplitude des Vorpulses 46 ist in dem Ausführungsbeispiel so gewählt, dass sie unterhalb der Laserschwelle I_{LT}, etwa in einem Bereich von 70%-90% der Laserschwelle I_{LT} liegt. Dabei ist angestrebt, so nahe wie möglich an die Laserschwelle heranzukommen, um mit Beginn des Pulslaserstroms so rasch wie möglich Licht zu emittieren, die Laserschwelle aber nicht vorzeitig zu überschreiten. Es sind also auch größere oder kleinere Sicherheitspuffer denkbar als der angegebene Rahmen von 70%-90%, was auch von den Schwankungen in Temperatur, Alterung und sonstigen Umgebungsbedingungen abhängt. Es sind alternative Ausführungsformen vorstellbar, in denen ein Überschreiten der Laserschwelle toleriert wird.

Die einfache Rechteckform des Vorpulses 46 wird in der Realität nicht erreicht, es sind Transienten in Form von Anstiegs- und Abfallflanken zu erwarten. Vorlaufzeit t₋ und Abklingzeit t₊ sollten möglichst kurz gewählt sein, wobei sich die Dauer vor allem dadurch bestimmt, dass der Lichtpuls 44 selbst von keinen Transienten mehr betroffen ist. Dafür genügt gewöhnlich ein geringes Vielfaches der Pulsdauer tₚ. Bei einer beispielhaften Pulsbreite von tₚ=5ns wäre also eine mögliche Wahl für t₋ und tₚ einige wenige bis einige zehn Nanosekunden, wobei die Abklingzeit t₊ meist kürzer ist als die Vorlaufzeit t₋.

Die Werte für den maximalen Pulslaserstrom I_{LP} und die Laserschwelle I_{LT} hängen von der Wahl der Laserlichtquelle 14 ab. Beispielhafte Werte für einen Kantenemitter im sichtbaren Licht sind ca. 50mA für die Laserschwelle I_{LT} und ca. 200-300mA für den maximalen Pulslaserstrom I_{LP}.

Die dargestellte Ansteuerung der Laserlichtquelle 14 durch die Steuerung 30 mittels der Treiberschaltung 16 kennt also drei Zustände, nämlich einen Ruhezustand, in dem kein Laserstrom fließt, einen Vorbereitungszustand, in dem der Vorpulslaserstrom als Biasstrom fließt, und einen Arbeitszustand, der nur über den Vorbereitungszustand erreicht werden kann und in dem der Pulslaserstrom gemeinsam mit dem Vorpulslaserstrom fließt, wobei in dem Arbeitszustand durch einen entsprechend erhöhten Pulslaserstrom auf den Biasstrom auch verzichtet werden könnte.

Diese Ansteuerung sorgt dafür, dass der Lichtpuls 18 stets auf einem Niveau dicht an der Laserschwelle aufsetzt und daher mit möglichst geringer Verzögerung zu dem Steuersignal tatsächlich ausgesandt wird. Da der Vorpulslaserstrom bevorzugt unterschwellig ist, entsteht zuvor keinerlei Störlicht, das für Messung und Augenschutz nachteilig wäre. Insgesamt ist durch den auf ein kurzes Zeitintervall um das Aussenden des Lichtpulses 18 begrenzten Vorbereitungszustand die Laserlichtquelle 14 über lange Zwischenphasen stromlos. Sie kann in dieser Zeit kein störendes Licht emittieren und erwärmt sich nicht. Dadurch werden Temperatur- und Alterungseffekte gemindert. Durch die Temperaturkompensation für den Vorpulslaserstrom werden verbleibende Schwankungen in der Betriebstemperatur ausgeglichen.

Erfindungsgemäß ist der Einsatz einer Monitoring-Diode nicht erforderlich und auch nur begrenzt sinnvoll, da der unterschwellige Vorpulslaserstrom ohnehin nicht zu einer Emission von Licht führt. Prinzipiell kann natürlich eine Monitoring-Diode zusätzlich eingesetzt werden, um zu überprüfen, ob während des Vorbereitungszustandes wirklich kein Licht emittiert wird und gegebenenfalls den Vorpulslaserstrom nachzuregeln, um ihn zumindest nur knapp über oder bevorzugt unter der Laserschwelle zu halten.

## Patentansprüche

1. Optoelektronischer Sensor (10) mit einem Lichtsender (12) zum Aussenden von Laserpulsen (18) in einen Überwachungsbereich (24) mittels einer Laserlichtquelle (14) und mit einer Treiberschaltung (16, 30) für die Laserlichtquelle (14), welche dafür ausgebildet ist, den Lichtsender (12) in einen Arbeitszustand, in dem die Laserlichtquelle (14) einen Laserpuls (18) aussendet, oder den Lichtsender (12) nur jeweils vor dem Aussenden eines Laserpulses (18) in einen Vorbereitungszustand zu versetzen, in dem die Laserlichtquelle (14) vorgespannt oder der Laserlichtquelle (14) ein Biasstrom zugeführt wird,
**dadurch gekennzeichnet,**
**dass** die Treiberschaltung (16, 30) weiterhin dafür ausgebildet ist, die Laserlichtquelle (14) in dem Vorbereitungszustand bis zum Beginn des Laserpulses (18) auf 70%-90% der Laserschwelle an diese heranzuführen, sie jedoch nicht zu überschreiten.

2. Sensor (10) nach Anspruch 1,
wobei eine Steuereinheit (30) vorgesehen ist, welche dafür ausgebildet ist, der Treiberschaltung (16) Eigenschaften des Laserpulses (18, 44) und/oder des Vorbereitungszustands vorzugeben, insbesondere Zeitverhalten und/oder Amplitudenverhalten.

3. Sensor (10) nach einem der vorhergehenden Ansprüche,
wobei die Treiberschaltung (16, 30) dafür ausgebildet ist, den Lichtsender (12) mit einem kurzen zeitlichen Vorlauf in den Vorbereitungszustand zu versetzen, der insbesondere etwa dem ein- bis fünffachen der Dauer des Laserpulses (18) entspricht.

4. Sensor (10) nach einem der vorhergehenden Ansprüche,
wobei die Treiberschaltung (16, 30) dafür ausgebildet ist, den Vorbereitungszustand für den Lichtsender (12) frühestens zum Ende des Laserpulses (18) und dann schnell, insbesondere spätestens nach einer ein- bis fünffachen Dauer des Laserpulses (18) zu beenden.

5. Sensor (10) nach einem der vorhergehenden Ansprüche,
wobei ein Temperaturfühler (42) vorgesehen ist, um die Betriebstemperatur der Laserlichtquelle (14) zu bestimmen, und wobei die Treiberschaltung (16, 30) dafür ausgebildet ist, die Amplitude in dem Vorbereitungszustand anhand einer Tabelle oder Rechenvorschrift temperaturabhängig zu wählen.

6. Sensor (10) nach einem der vorhergehenden Ansprüche,
wobei die Treiberschaltung (16, 30) dafür ausgebildet ist, die Laserlichtquelle (14) außerhalb des Arbeitszustandes und des Vorbereitungszustands stromfrei zu schalten und/oder den Arbeitszustand nur über den Vorbereitungszustand zu erreichen.

7. Sensor (10) nach einem der vorhergehenden Ansprüche,
der als entfernungsmessendes System ausgebildet ist und insbesondere einen Lichtempfänger (28) für den Empfang von Lichtpulsen (18) sowie eine Auswertungseinheit (30) aufweist, welche dafür ausgebildet ist, mittels Lichtlaufzeitverfahren aus einer Pulslaufzeit zwischen Aussenden und Empfangen eines Lichtpulses (18) eine Entfernung zu berechnen.

8. Sensor nach Anspruch 7,
der als entfernungsmessender Laserscanner ausgebildet ist und insbesondere zusätzlich eine Ablenkeinheit aufweist, um mit nacheinander ausgesandten Lichtpulsen einen Überwachungsbereich zu überstreichen.

9. Verfahren zum Betreiben eines Lichtsenders (12) in einem optoelektronischen Sensor (10), insbesondere einem entfernungsmessenden System oder einem entfernungsmessenden Laserscanner, wobei der Lichtsender (12) zunächst nur jeweils kurz vor dem Aussenden eines Laserpulses (18) in einen Vorbereitungszustand, in dem eine Laserlichtquelle (12) vorgespannt oder der Laserlichtquelle (14) ein Biasstrom zugeführt wird, und dann in einen Arbeitszustand versetzt wird, in dem die Laserlichtquelle (14) Laserpulse (18) in einen Überwachungsbereich (24) aussendet,
**dadurch gekennzeichnet,**
**dass** die Laserlichtquelle (14) in dem Vorbereitungszustand bis zum Beginn des Laserpulses (18) in dem Arbeitszustand auf 70%-90% der Laserschwelle an diese herangeführt wird, sie jedoch nicht überschreitet.

10. Verfahren nach Anspruch 9,
wobei in dem Arbeitszustand und/oder in dem Vorbereitungszustand das Zeitverhalten und/oder das Amplitudenverhalten der Laserlichtquelle (14) vorgegeben wird.

11. Verfahren nach Anspruch 9 oder 10,
wobei der Lichtsender (12) mit einem kurzen zeitlichen Vorlauf in den Vorbereitungszustand versetzt wird, der insbesondere etwa dem ein- bis fünffachen der Dauer des Laserpulses (18) entspricht, und wobei der Vorbereitungszustand für den Lichtsender (12) frühestens zum Ende des Laserpulses (18) und dann schnell, spätestens nach einer ein- bis fünffachen Dauer des Laserpulses (18) beendet wird, wobei der Lichtsender (12) nur aus dem Vorbereitungszustand in den Arbeitszustand versetzt werden kann und wobei die Laserlichtquelle (14) außerhalb des Arbeitszustandes und des Vorbereitungszustandes stromfrei geschaltet wird.

12. Verfahren nach einem der Ansprüche 9 bis 11,
wobei die Betriebstemperatur der Laserlichtquelle (14) bestimmt wird, und wobei die Amplitude in dem Vorbereitungszustand anhand einer Tabelle oder Rechenvorschrift temperaturabhängig gewählt wird.

## Claims

1. Optoelectronic sensor (10) having a light transmitter (12) for the transmitting of laser pulses (18) into a monitored region (24) by means of a laser light source (14) and having a driver circuit (16, 30) for the laser light source (14) which is designed to set the light transmitter (12) into a working state in which the laser light source (14) transmits a laser pulse (18) or to set the light transmitter (12) into a preparatory state in which the laser light source (14) is biased or a bias current is supplied to the laser light source (14) only prior to the respective transmission of a laser pulse (18), **characterized in that**
the driver circuit (16, 30) is further designed to place the laser light source (14) to 70% to 90 % of the lasing threshold in the preparatory state prior to the start of the laser pulse (18), but not to exceed the lasing threshold.

2. A sensor (10) in accordance with claim 1,
wherein a control unit (30) is provided which is designed to preset characteristics of the laser pulse (18, 44) and/or the preparatory state for the driver circuit (16) in particular to preset the time behaviour and/or amplitude behaviour.

3. A sensor (10) in accordance with any of the preceding claims,
wherein the driver circuit (16, 30) is designed to set the light transmitter (12) in the preparatory state with a short lead time corresponding in particular approximately to one to five times the duration of the laser pulse (18).

4. A sensor (10) in accordance with any of the preceding claims, wherein the driver circuit (16, 30) is designed to quickly, but at the earliest at the end of the laser pulse (18), terminate the preparatory state for the light transmitter (12), and in particular at the latest after one to five times the duration of the laser pulse (18).

5. A sensor (10) in accordance with any of the preceding claims,
wherein a temperature sensor (42) is provided in order to determine the operating temperature of the laser light source (14) and wherein the driver circuit (16, 30) is designed to select the amplitude in the preparatory state in temperature-dependent manner with reference to a table or a computing rule.

6. A sensor (10) in accordance with any of the preceding claims,
wherein the driver circuit (16, 30) is designed to switch the laser light source (14) to a current-free state outside of the working state and of the preparatory state and/or to attain the working state only via the preparatory state.

7. A sensor (10) in accordance with any of the preceding claims,
which is designed as a range-measuring system and in particular has a light receiver (28) for the reception of light pulses (18) and also has an evaluation unit (30) which is designed to calculate a range by means of the light transit time method from the pulse transit time between the transmission and the reception of a light pulse (18).

8. A sensor in accordance with claim 7,
which is designed as a range-measuring laser scanner and which in particular additionally has a deflection unit in order to sweep sequentially transmitted light pulses over a monitoring range.

9. A method for the operation of a light transmitter (12) in an optoelectronic sensor (10), in particular in a range-measuring system or in a range-measuring laser scanner, wherein the light transmitter (12) is initially set into a preparatory state in which the laser light source (14) is biased or a bias current is supplied to the laser light source (14) only shortly prior to the transmission of a laser pulse (18) and then into a working state in which the laser light source (14) transmits laser pulses (18) into a monitored region (24)
**characterized in that**
the laser light source (14) is placed to 70 % to 90 % of the lasing threshold in the preparatory state up to the start of the laser pulse (18) in the working state, but does not however exceed it.

10. A method in accordance with claim 9,
wherein the time behaviour and/or the amplitude behaviour of the laser light source (14) is preset in the working state and/or the preparatory state.

11. A method in accordance with claim 9 or 10,
wherein the light transmitter (12) is set in the preparatory state with a short lead time which in particular corresponds approximately to one to five times the duration of the laser pulse (18), wherein the preparatory state for the light transmitter (12) is terminated at the earliest at the end of the laser pulse (18) and then quickly, at the latest after one to five times the duration of the laser pulse (18), wherein the light transmitter (12) can only be set into the working state from the preparatory state and wherein the laser light source (14) is switched to be current-free outside of the working state and of the preparatory state.

12. A method in accordance with any of claims 9 to 11,
wherein the operating temperature of the laser light source (14) is determined and wherein the amplitude in the preparatory state is selected in temperature-dependent manner with reference to a table or a computing rule.

## Revendications

1. Capteur optoélectronique (10) comprenant un émetteur de lumière (12) pour émettre des impulsions laser (18) dans une zone de surveillance (24) au moyen d'une source de lumière laser (14) et comprenant un circuit pilote (16, 30) pour la source de lumière laser (14), lequel est réalisé pour mettre l'émetteur de lumière (12) dans une situation de travail dans laquelle la source de lumière laser (14) émet une impulsion laser (18) ou pour mettre l'émetteur de lumière (12) dans une situation préparatoire uniquement à chaque fois avant l'émission d'une impulsion laser (18), dans laquelle la source de lumière laser (14) est mise sous une tension préliminaire ou bien un courant de polarisation est fourni à la source de lumière laser (14),
**caractérisé en ce que**
le circuit pilote (16, 30) est en outre réalisé pour, dans la situation préparatoire jusqu'au commencement de l'impulsion laser (18), approcher la source de lumière laser (14) jusqu'à 70 % à 90 % du seuil de laser, mais sans toutefois dépasser celui-ci.

2. Capteur (10) selon la revendication 1,
dans lequel est prévue une unité de commande (30) qui est réalisée pour imposer au circuit pilote (16) des propriétés de l'impulsion laser (18, 44) et/ou de la situation préparatoire, en particulier un comportement temporel et/ou un comportement en amplitude.

3. Capteur (10) selon l'une des revendications précédentes,
dans lequel le circuit pilote (16, 30) est réalisé pour mettre l'émetteur de lumière (12) dans la situation préparatoire, avec un bref amorçage temporel, qui correspond en particulier environ à une à cinq fois la durée de l'impulsion laser (18).

4. Capteur (10) selon l'une des revendications précédentes,
dans lequel le circuit pilote (16, 30) est réalisé pour terminer la situation préparatoire pour l'émetteur de lumière (12) au plus tôt vers l'extrémité de l'impulsion laser (18) et ensuite rapidement, en particulier au plus tard après une durée de une à cinq fois celle de l'impulsion laser (18).

5. Capteur (10) selon l'une des revendications précédentes,
dans lequel est prévu un capteur de température (42), afin de déterminer la température de service de la source de lumière laser (14), et dans lequel le circuit pilote (16, 30) est réalisé pour choisir l'amplitude dans la situation préparatoire au moyen d'un tableau ou d'une règle de calcul en fonction de la température.

6. Capteur (10) selon l'une des revendications précédentes,
dans lequel le circuit pilote (16, 30) est réalisé pour commuter la source de lumière laser (14) sans courant à l'extérieur de la situation de travail et de la situation préparatoire, et/ou pour atteindre la situation de travail uniquement via la situation préparatoire.

7. Capteur (10) selon l'une des revendications précédentes,
qui est réalisé sous forme de système de mesure de distance, et comprend en particulier un récepteur de lumière (28) pour la réception d'impulsions de lumière (18), ainsi qu'une unité d'évaluation (30) qui est réalisée pour calculer une distance, au moyen d'une procédure par temps de propagation de la lumière, à partir d'un temps de propagation d'une impulsion entre l'émission et la réception d'une impulsion de lumière (18).

8. Capteur selon la revendication 7,
qui est réalisé sous forme de scanneur à laser de mesure de distance, et comprend en particulier en supplément une unité de déflexion, afin de balayer une zone de surveillance avec des impulsions de lumière émises les unes après les autres.

9. Procédé pour le fonctionnement d'un émetteur de lumière (12) dans un capteur optoélectronique (10), en particulier dans un système de mesure de distance ou dans un scanneur à laser de mesure de distance, dans lequel l'émetteur de lumière (12) est tout d'abord mis, à chaque fois brièvement avant l'émission d'une impulsion laser (18), dans une situation préparatoire dans laquelle une source de lumière laser (12) est soumise à une tension préliminaire ou bien un courant de polarisation est alimenté à la source de lumière laser (14), et est ensuite mis dans une situation de travail dans laquelle la source de lumière laser (14) émet des impulsions laser (18) dans une zone de surveillance (24), **caractérisé en ce que** la source de lumière laser (14) est approchée, dans la situation préparatoire jusqu'au commencement de l'impulsion laser (18) dans la situation de travail jusqu'à 70 % à 90 % du seuil laser, mais toutefois sans le dépasser.

10. Procédé selon la revendication 9,
dans lequel le comportement temporel et/ou le comportement en amplitude de la source de lumière laser (14) est imposé dans la situation de travail et/ou dans la situation préparatoire.

11. Procédé selon la revendication 9 ou 10,
dans lequel l'émetteur de lumière (12) est mis dans la situation préparatoire après un bref amorçage temporel, qui correspond en particulier environ à une à cinq fois la durée de l'impulsion laser (18), ladite situation préparatoire pour l'émetteur de lumière (12) étant terminée au plutôt à la fin de l'impulsion laser (18) et ensuite rapidement, au plus tard après une durée de une à cinq fois celle de l'impulsion laser (18), tel que l'émetteur de lumière (12) peut être mis dans la situation de travail uniquement depuis la situation préparatoire, et la source de lumière laser (14) est commutée sans courant à l'extérieur de la situation de travail et de la situation préparatoire.

12. Procédé selon l'une des revendications 9 à 11,
dans lequel la température de service de la source de lumière laser (14) est déterminée, et l'amplitude dans la situation préparatoire est choisie au moyen d'un tableau ou d'une règle de calcul en fonction de la température.
